# EUROPEAN PATENT APPLICATION

(11) **EP 1 179 776 A1**
(43) Date of publication of application: **13.02.2002**
(21) Application number: 00306878.0
(22) Date of filing: 11.08.2000
(51) Int. Cl.: G06F 11/32

(54) **Test automation framework**

(71) Applicant: Sony Service Centre (Europe) N.V., 1840 Londerzeel (BE)
(72) Inventor: Wybouw-Cognard, Lucile, Sony Service Ctr. EU N.V., 1130 Brussels (BE)
(74) Representative: Ayers, Martyn Lewis Stanley

(57) **Abstract**

A test automation framework and a method of testing software applications, the framework providing a memory for storing at least one test scenario including a test application, at least one input and an expected output, an input selection means for selecting one or more test scenarios (12a) and, for each selected test scenario, selecting how to prepare, run and verify a test application (12c), a selection memory for storing the results of the input selection means, select means for selecting a test application according to the contents of the selection memory, prepare means for operating a predetermined prepare process for building the test application according to the results of the input selection means and storing a log file, run means for operating a predetermined run process for running the test application according to the results of the input selection means and for storing a log file, verify means for operating a verify process for verifying the results of the test application according to the results of the input selection means and for storing a log file and means for outputting a report of the test (68) including at least extracts of the preparation log file, the run log file and the verify log file if an error occurred.

## Description

The present invention relates to a test automation framework, in particular, for testing software applications and a method of testing software applications.

When new software is written, it is usually necessary to test the software to ensure that it operates correctly. This process may often require running the software in different ways and providing a variety of different inputs. It is then necessary to determine whether or not the software has functioned correctly. Where the software is designed to provide an output, it may also be necessary to determine whether the output is correct or not. This may require comparing the output to an expected output.

For a software developer, conducting all of these tests for a new software application, particularly where a large number of different input variables are used, can be a time-consuming operation.

Often, a number of different software applications are developed at the same time. In these circumstances, the developer or test operator will require a significant amount of time to conduct all of the necessary tests, even if the applications use similar sets of inputs.

It is an object of the present invention to alleviate the burden on developers of testing new software applications.

According to the present application, there is provided a test automation framework for testing software applications including:
a memory for storing at least one test scenario including a test application, at least one input and an expected output;
an input selection means for selecting one or more test scenarios and, for each selected test scenario, selecting how to prepare, run and verify a test application;
a selection memory for storing the results of the input selection means;
select means for selecting a test application according to the contents of the selection memory;
prepare means for operating a predetermined prepare process for building the test application according to the results of the input selection means and storing a log file;
run means for operating a predetermined run process for running the test application according to the results of the input selection means and for storing a log file;
verify means for operating a verify process for verifying the results of the test application according to the results of the input selection means and for storing a log file; and
means for outputting a report of the tests which can include at least extracts of the preparation log file, the run log file and the verify log file if an error occurred.

According to the present invention, there is also provided a method of testing software applications including:
storing in a memory at least one test scenario including a test application, at least one input and an expected output;
selecting one or more test scenarios and, for each selected test scenario, selecting how to prepare, run and verify a test application;
storing the results of the input selection;
selecting a test application according to the stored results;
operating a predetermined prepare process for building the test application according to the stored results and storing a log file;
operating a predetermined run process for running the test application according to the stored results and for storing a log file;
operating a verify process for verifying the results of the test application according to the stored results and for storing a log file; and
outputting a report of the tests which can include at least extracts of the preparation log file, the run log file and the verify log file if an error occurred.

In this way, software applications may be tested automatically. The framework provides a structure by which the tests may be conducted and yet the prepare, run and verify means allow the developer to structure the prepare, run and verify processes according to requirements. Grouping test applications together with predetermined inputs and outputs allows the developer to structure and use a number of different tests in a coherent manner.

For the first time, the invention provides a common language by which developers can compare the results of their tests. A common test structure is provided such that tests conducted by different developers may be conducted and compared in a similar way.

The prepare means, run means and verify means may all operate their corresponding processes on the next selected application.

Alternatively, the select means may select each test application in turn for the prepare means, then each test application in turn for the run means and then each test application in turn for the verify means.

In this way, the test automation framework is able to operate in two distinct different ways without changing the prepare, test and verify processes as defined by the user. The test automation framework may carry out the tests in the order of the test applications, carrying out the prepare, run and verify processes for each test application, or in the order of the processes, carrying out the prepare process for all of the test applications, then the run process and finally the verify process.

Preferably, the test automation framework further comprises means for performing a sanity check on the results of the input selection means and, in the case of an error, aborting all tests and reporting an error.

In this way, a fundamental check is provided on the test automation framework as set up by a developer for a series of particular tests.

Preferably, the test automation framework comprises means for preparing exit status codes from the prepare process and the run process prior to performing respectively the run process and the verify process and for abandoning the respective test when the exit status codes are not OK, wherein the report of the tests can include at least extracts from the log files where the exit status codes were not OK.

In this way, whenever a failure occurs during one of the processes for a particular test, no further processing is carried out for that test, since the results would be meaningless. However, since a failure occurred during that process, the test automation framework provides information from the log file of the failed process to enable the developer to see where the failure occurred.

Preferably, the test automation framework further comprises prologue means for operating a predetermined prologue process for a plurality of test applications and storing a log file, wherein the input selection means is additionally for selecting how to perform and report the prologue process, and the report of the tests can include at least extracts of the prologue file according to the results of the input selection means.

In this way, the test automation framework allows the developer to use a prologue process to carry out predetermined preparation processes on all of the test applications to be conducted.

Preferably, the test automation framework further comprises means for preparing an exit status code from the prologue process and abandoning tests when the exit status code is not OK, wherein the report of the tests can include at least extracts from the log files when the exit status code is not OK.

In this way, when a failure is detected during the prologue process, all further tests may be abandoned. Since the prologue process will apply to all tests, any failure in the process will render the results of further processes meaningless.

Preferably, the test automation framework further comprises a mailer for sending the results of the tests to a preselected user or to a set of preselected users.

In this way, the developer can arrange for results of the tests to be sent to him at a remote location or, indeed, to anyone else requiring the results.

The present invention may be embodied as code components recorded on a computer readable storage medium.

The invention will be more clearly understood from the following description, given by way of example only, with reference to the accompanying drawings, in which:
Figure 1 illustrates schematically the use of the test automation framework;
Figures 2 and 3 together illustrate operation of the test automation framework;
Figure 4 illustrates a prepare process;
Figure 5 illustrates a run process;
Figure 6 illustrates a verify process; and
Figure 7 illustrates a report process.

The present invention will be described for an embodiment in which a software application is tested on an embedded device. Of course, the test automation framework may also be used to test applications on workstations.

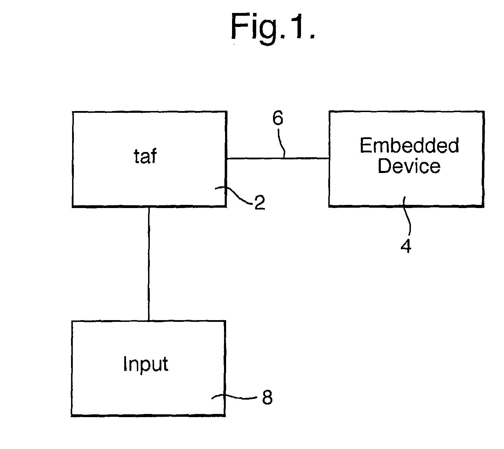

As illustrated in figure 1, the test automation framework 2 loads a test application onto an embedded device 4 via a connection 6. The connection 6 may be a direct line or maybe part of a network. In this way, the test automation framework may be used in conjunction with any number of embedded devices on the network. Similarly, each embedded device may be used by the test automation framework of any number of developers.

The test application which is loaded onto the embedded device may comprise entirely new self contained code. However, more often the new code will be combined with other code to form the test application. As will be described below, the test automation framework can build the test application as part of a prepare process.

The test automation framework is provided with an input 8 to allow the developer to control it. Furthermore, the test application framework may include hardware components that allow remote access and reset of embedded devices such as development boards. As will be explained further below, the test automation framework includes components that automate the test execution process and the monitoring of its evolution.

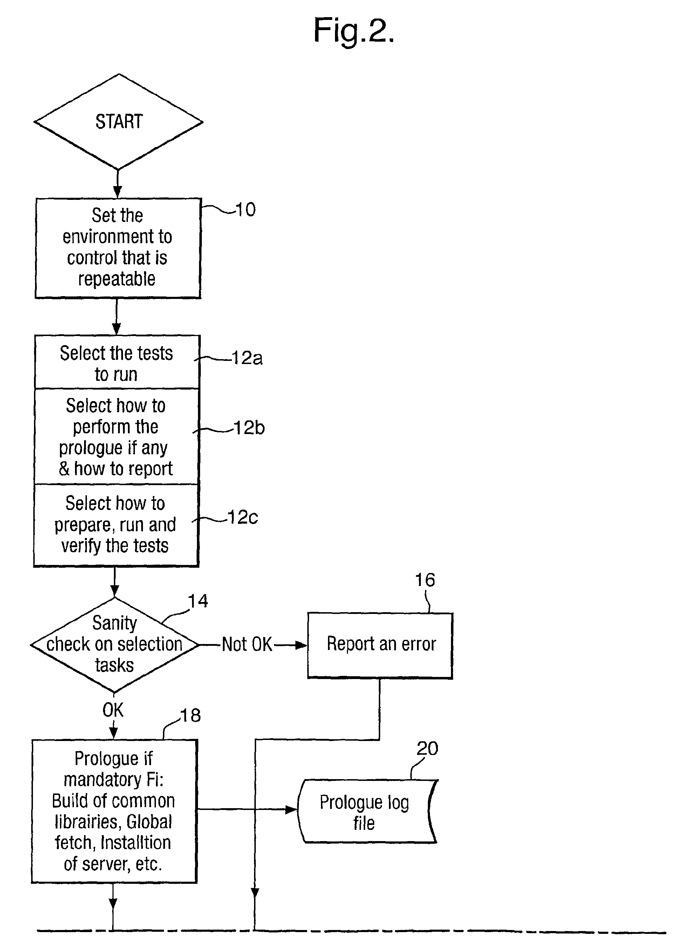

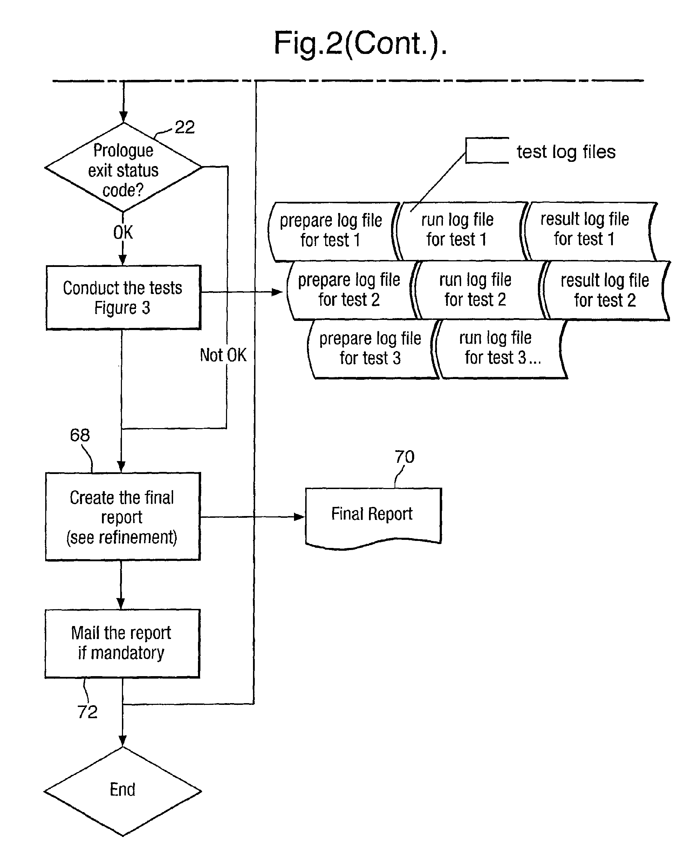

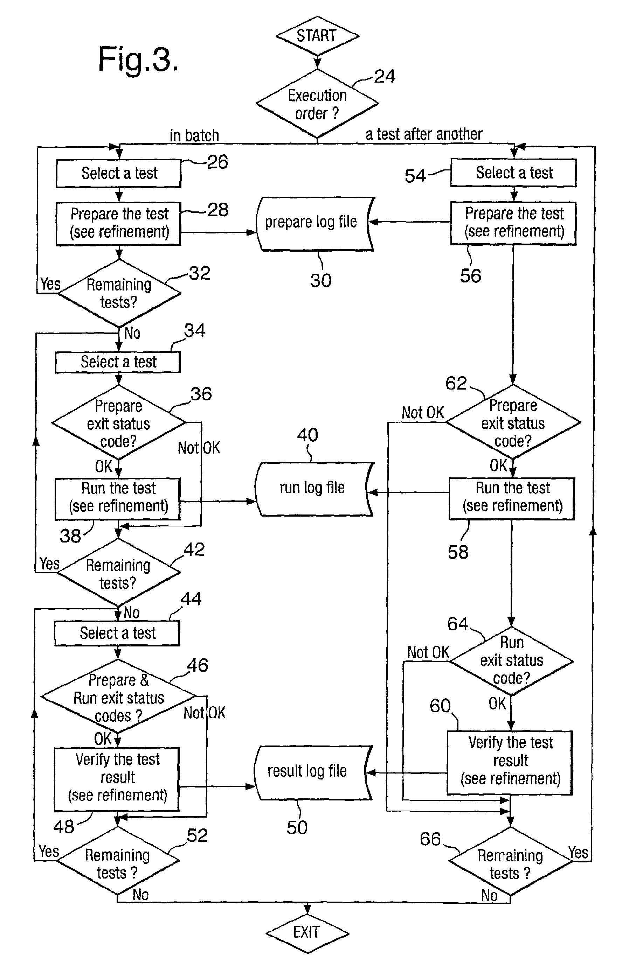

Figures 2 and 3 together illustrate the overall operation of the test automation framework.

The test automation framework is described in terms of both functional components for carrying out particular steps and also as functional steps in an overall process. It will be appreciated that the framework could be embodied as an arrangement of hardware elements which are configured to carry out the various operational steps. However, in a preferred embodiment, the framework is embodied in software.

Before the test automation framework is operated to conduct the tests using the required test applications, the user enters, in a database, information relating to the test application, any required inputs and any expected outputs. As will be described below, this information is stored as a series of test scenarios. When the test automation framework is operated, the user specifies the test scenarios to be used. Thus, the test automation framework operates on the basis of the previously specified test scenarios.

As will become clear from the following, the test automation framework is intended to be flexible and to allow the developer to configure tests according to the requirements of the test applications. Hence, specific operations for preparing or building the test applications, for executing or running the test applications, for verifying the operation of the test applications and for reporting the results are provided by separate components. As with the test automation framework itself, these components can be provided as hardware or as software. Thus, and the developer can create and customise his or her own processes for use as part of the test automation framework.

In order to set the information discussed above, the framework includes an input selection means. This could be embodied as a specific hardware components. However, in the preferred embodiment, it merely comprises a software routine which allows the test automation framework to identify the required settings.

After starting, as indicated by step 10, the test automation framework sets the general environment. In particular, the framework sets up any hardware components and any software applications with which the framework and the test applications are to run. Furthermore, it keeps a record of the environment so that it is possible for the developer to reproduce exactly the circumstances surrounding a series of tests and, if necessary, to determine whether any failures of the tests result of the particular environment.

As part of step 12, the framework, determines which tests are to be run in step 12a, how the results are to be reported in step 12b and how to prepare, run and verify the tests in step 12c. The processes by which the framework selects the tests and selects how to prepare, run and verify the tests will be described below.

The framework is provided with means to conduct a sanity check on selection tasks. In particular, in step 14, and the framework conducts a sanity check on the tests selected in step 12. In this process, the framework carries out basic checks in order to determine that all of the selected tests are compatible with the selected inputs and outputs. Thus, if the sanity check determines that there is an in compatibility, it reports an error in step 16. Since it is will not be possible to carry out the tests as specified, the framework and then causes the automatic testing to be terminated. In other words, the automatic testing is abandoned and the framework ends its operation.

The framework illustrated in figure 2 includes prologue means 18 for operating a prologue process. It is not essential to carry out a prologue process and, hence, this means need not be included. The prologue process itself may be defined separately and will be described further below. In conjunction with the prologue means 18, there is provided means for preparing exit status codes for the prologue process. This will be described further below.

In order to conduct the actual tests, the framework includes prepare means, run means and verify means. These are illustrated in terms of their functions in figure 3.

The framework itself merely includes the necessary means (whether hardware or software) to operate the various processes. However, as mentioned above, the processes themselves may be defined separately by the operator. Indeed, the input selection means and the selection steps 12 may include steps in which the required prepare, run and verify processes are specified.

Figure 3 illustrates two alternative structures in which the prepare, run and verify means may be organised. In particular, where a plurality of tests are to be conducted, the tests may be carried out on a batch basis or, alternatively, one test after the other. The batch construction is illustrated on the left half of figure 3.

First, the framework determines the order of execution in step 24. This order may have been specified with the input selection means in step 12.

Considering the batch process illustrated in figure 3, the framework first selects a test according to the execution order in step 26. A prepare means then conducts the prepare process as previously specified. The details of this process are defined by the prepare process itself and this will be discussed further below. However, by way of example, the prepare process may build the test application from the code under test and further software in which that code is used. Furthermore, it may build items required to run the test, for instance test libraries etc.

As illustrated in figure 3, the preparation step 28 is provided with a prepare log file 30. The prepare log file 30 is a log file for recording the prepare process. By means of this log file, a developer may subsequently follow the prepare process to determine how it was conducted and to establish where an error occurred.

According to the batch mode of operation, the framework then checks in step 32 whether or not any tests remain to be conducted. If further tests do remain, then the framework returns to the step of selecting a test, i.e. step 26 in figure 3. Thus, with the framework operating in the batch mode of operation, first carries out all of the prepare processing required for all of the tests before proceeding to run the tests.

When there are no further tests for preparation, the select means carries out a further step 34 for selecting a test. At this point, the framework includes a step 36 in which a means for checking exit status codes checks the exit status codes resulting from the prepare process. In other words, the prepare process produces status codes according to the processes which it conducts. All successful operations result in one code, for instance a "0", whereas a failed operation results in another code, for instance "1". The means for checking detects in step 36 an exit status code indicating a failed operation. Clearly, if the preparation of a test has failed in some way, there is no reason for continuing with that test. Therefore, the framework by passes the run means for operating a run process.

Assuming that the prepare exit status code was OK, the framework then uses a run means in step 38 to operate a predetermined run process. The details of this run process may be specified in the selection step 12 and will be discussed further below.

Just as with the prepare means, the run means produces a run log file 40. The log file records all of the operations in the run process such that the user can subsequently view all of the steps in the process and determine the cause of any errors.

In step 42, the framework again determines whether there are any remaining tests, in this case, required for running. If there are, the framework returns to step 34 in order to select the next test. Otherwise, the framework proceeds to step 44 to select one of the tests for the verification process.

In step 46, the means for checking again checks the exit status codes for the prepare process. In addition, is checks the exit status codes the run process. Thus, if any failures have occurred in the processing of a particular test, the framework aborts further processing of that test.

Assuming that the exit status codes for the prepare and run processes were OK, the framework then uses a verify means to operate a verify process as determined previously, for instance by means of the selection step 12. As part of the verify step 48, a result or verify log file is produced. Thus, a developer can determine where any failure results in a verify process.

In step 52, the framework again determines whether there are any remaining tests , in this case, for the verify process.

The arrangement for conducting one test after another is illustrated in the right half of figure 3.

Having selected a particular test in step 54, the prepare process, the run process and the verify process are consecutively conducted for that selected test. Hence, a prepare means operates the prepare process in step 56 and produces the prepare log file 30, the run means operates the run process in the step 58 and produces the run log file 40 and the verify means operates the verify process in step 60 and produces the verify or result log file 50.

With this mode of operation, the framework also employs the means for checking exit status codes. Thus, in step 62, the exit status code of the prepare process is checked. If a failure in the prepare process is detected, then running and verify the test in question is aborted. Similarly, in step 64, the exit status code for the run process is checked and, if a failure is detected, then the verify process for that test is aborted.

Having completed the prepare, run and verify processes for a selected test, the framework determines whether there are any remaining tests and, if so, the select means selects another test in step 54.

Finally, as illustrated in Figure 2, the test automation framework includes means for operating a process of preparing a final report. This is illustrated by step 68. The content of the final report and the process by which it is prepared need not form part of the basic structure of the framework. In particular, it may be a separate user defined process in the same way as the prepare, run and verify processes. Thus, the particular final report process may be defined as part of the selection step 12b.

The test automation framework illustrated in figure 2 also includes means for mailing the report. This is an optional feature which allows the framework to conduct all of the selected tests and then send the final report to a remote location, for instance by means of an e-mail.

As mentioned above, the test automation framework may include a prologue means for operating a prologue process. Where a number of tests are to be conducted during the same use of the test automation framework, it is often the case that many of the tests have certain similarities. In other words, many of the steps required to be taken by the prepare process may be the same for all of the tests. The test automation framework allows a user to conduct the tests more efficiently. In particular, the prologue means may operate a predetermined prologue process. The prologue process is, in essence, the preparation processing steps which are in common between all of the tests.

As part of the selection step 12, the input selection means allows the selection of the prologue in step 12b. Then, in step 18, a prologue means may operate the preselected prologue process to conduct the required functions such as building common libraries, global fetch, installation of a server etc. As with the prepare, run and verify processes, the prologue process produces a prologue log file. In this way, a user can investigate any errors occurring during the prologue process. Means are also provided for checking the exit status code from the prologue process. Thus, if a failure is detected in the prologue process, the framework abandons all further tests. In particular, since the prologue process applies to all tests, there is no reason to proceed with any of them.

The structure of the test automation framework as described above is proposed to give the user maximum flexibility in arranging tests for test applications. In particular, the prologue, prepare, run, verify and report processes our provided as separate processes which can be defined by the user. This allows each user to tailor the particular tests to the test applications in question.

As mentioned previously, in the preferred embodiment, the test automation framework is embodied in software. Preferably, the framework then supports plug-ins corresponding to the prologue, prepare, run, verify and report processes. Thus, the framework includes a prologue plug-in which is optional and is responsible for any preliminary tasks, such as building libraries for the test applications. It also includes a prepare plug-in which is responsible for the creation of the test applications, a run plug-in responsible for the execution of the test applications, a verification plug-in responsible for the analysis of the execution output and a report plug-in responsible for reporting all of the test results.

The prepare, run, verify and report processes will be described below in terms of their functional steps. The actual processes may be embodied in hardware or, as with the preferred embodiment, as software, for instance in the form of plug-ins.

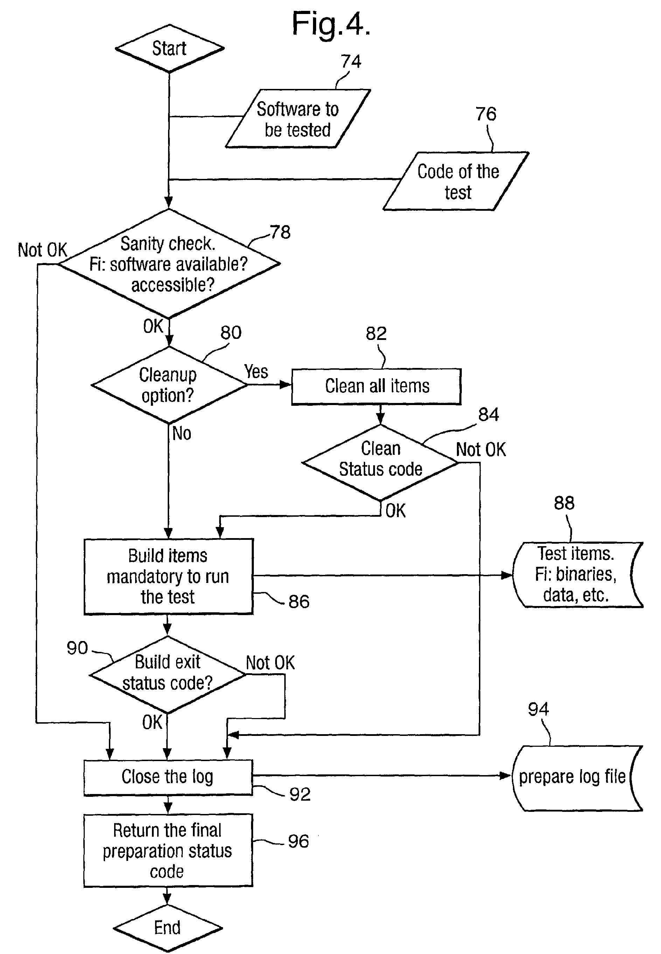

Figure 4 illustrates the prepare process. It should be appreciated that the prologue process operated in step 18 of figure 2 may be configured in much the same way as the prepare process. Hence, a specific description of the prologue process is omitted and reference should be made to the following description. The prepare and prologue processes can be arranged according to the requirements of the user.

As mentioned above, sometimes the test application under test is a complete piece of software. However, often, the code to be tested is to form part of other software and cannot operate on its own. In this case, the test application comprises the code under test together with the software on which it relies. Thus, initially, the prepare process combines the software to be tested 74 and the code of the test 76 to build the test application.

Having build the test application, the prepare process conducts a sanity check 78 of the type discussed previously above. Thus, if a failure is detected by the sanity check, the prepare process aborts further building of the test application.

If the sanity check 78 finds no failures, then it can conduct a cleanup option in step 80. This step is optional. If the cleanup option is selected, then the prepare process first cleans up all files that were generated by a previous prepare process before starting a new prepare process. Thus, in step 82, the prepare process cleans all code, for instance from previous log files. This step can also be taken by the prologue process.

After the cleanup operation of step 82, the prepare process checks the status code as discussed previously for the framework. If the status code indicates an error, then the prepare process is abandoned. Otherwise, the prepare process continues to step 86 in which various items 88 are built. These items may be any items necessary for the running of the test. They may be stored in appropriate files.

The exit status code of the build step is then determined in step 90.

In step 92, the log kept during the prepare process is terminated or closed and the contents is stored in the prepare log file 94.

Finally, in step 96, the status code for the entire prepare process is prepared. Thus, if any status code during the prepare process indicates an error, then the final status code will also indicates an error. This final status code is used in steps 36 and 62 of the overall framework to determined whether or not to proceed with the run process.

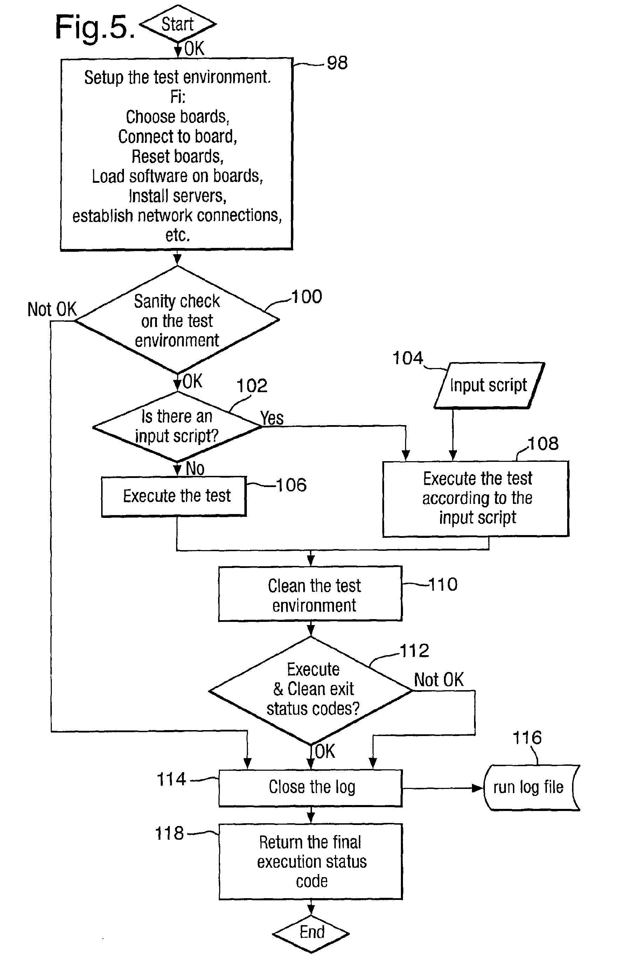

Figure 5 illustrates a possible run process.

In step 98, the run process sets up the specific environment required by the test in question. For example, it can choose a specified board as the embedded device 4, connect to that board, reset the board, load appropriate software on to the board, install any required servers and establish any network connections etc.

A sanity check is conducted on the test environment in step 100. If a failure is determined, then the run process is abandoned for the test in question.

It will be appreciated that not all test applications will require inputs to run. On the other hand, a test scenario may include a plurality of inputs which could be input in different ways, for instance in different orders. Thus, in step 102, the run process detects whether or not there is an input script 104.

In steps 106 and 108, the run process executes the test, either with or without the input script.

Preferably, having run the test, in step 110, the run process then cleans the test environment ready for further tests. However, this step is not essential since a clean up step could be included as part of the setup step 98.

Finally, the run process determines in step 112 the exit status codes for the execute and clean processes, closes in step 114 the log kept for the run process, forms the run log file 116 and returns a final status code. In this case, since the final status code returned in step 118 represents in the results of the execute and clean exit status codes determined in step 112, step 112 could be omitted.

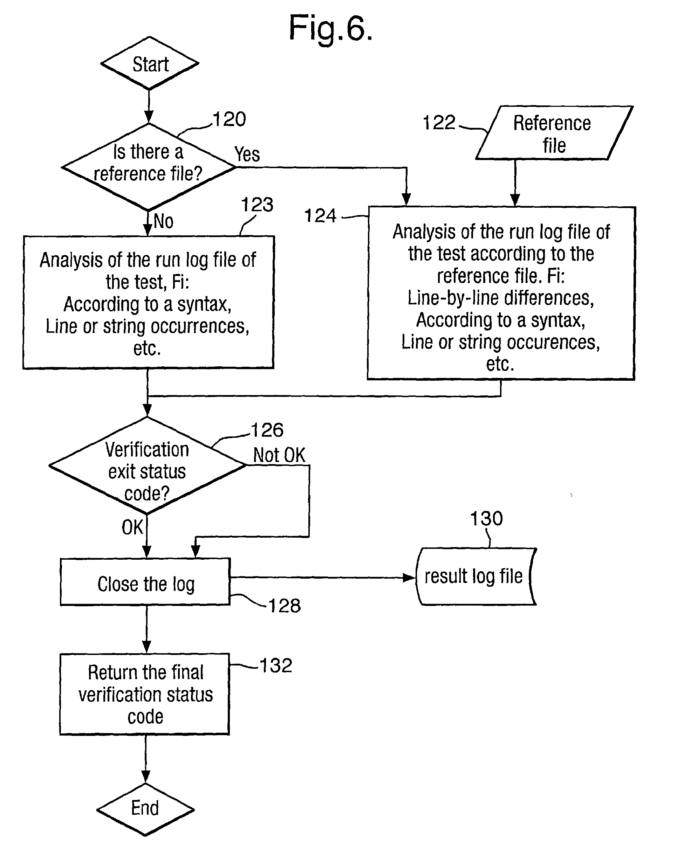

Figure 6 illustrates a verify process.

In step 120, the verify process determines whether or not there is a reference file 122. Depending on the test application, a developer may wish to compare the results of running the test application with predetermined outputs which may be installed in a reference file. Thus, in step 124, the verify process may carry out analysis of the run log file according to the reference file and as previously defined by the developer . This may involve conducting comparisons for line-by-line differences, analysis according to a predefined syntax or checking for line or string occurrences.

Alternatively, as in step 123, the verify process may merely analyse the run of file without reference to a reference file. Once again, this can involve analysis of the run log file according to a predefined syntax, checking for line or string occurrences etc.

In step 126, the verify process checks the exit status code for the verification process.

Since the verification process has now ended, the log is closed in step 128 and the results are stored in the results log file or verify log file. In step 132, the verify process then returns the final verification status code.

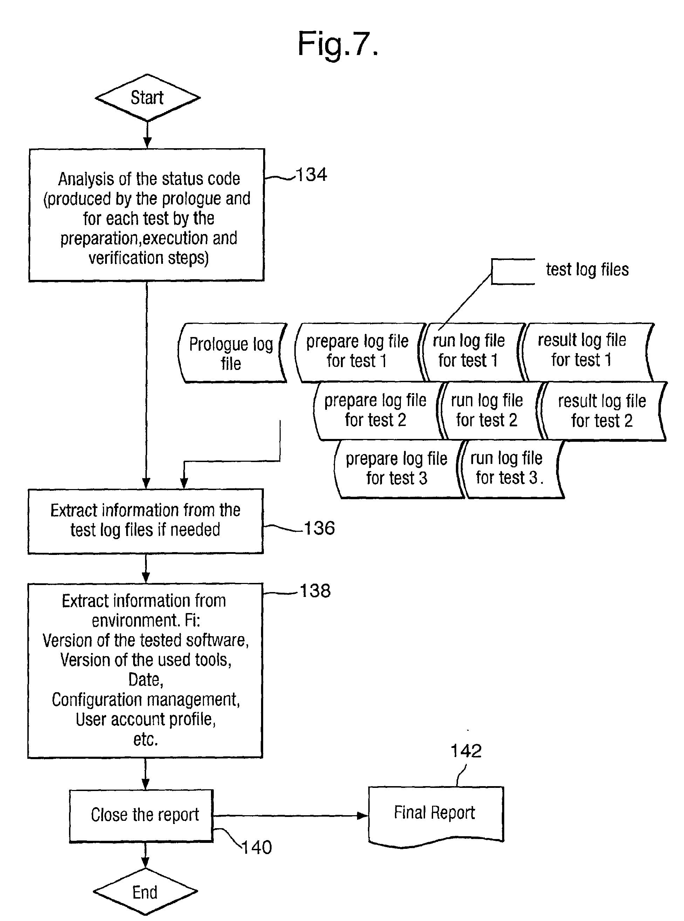

Figure 7 illustrates a report process.

In step 134, the report process first analyses the status codes produced at each stage of the test automation framework process. In particular, for each test conducted, it is determined whether or not any error occurred during the prologue, prepare, run and verify processes.

In step 136, the report process takes from the prologue, prepare, run and verify log files various extracts. The particular extracts taken from the log files can be determined by the developer. Thus, for some applications, the developer may wish to see the entire contents of some log files. However, in most cases, it is only particular parts of the log files which will be of interest and the developer can arrange for those parts of the log files to be extracted. On the other hand, assuming that the tests were successful, the developer may not require any information from the log files.

It is proposed that when an error has occurred in the test process, for instance, as indicated by a status code and recognised in step 134, the report process extracts the relevant log information from the log files in step 136. For example, if an error is indicated for the preparation process of a particular test, then the report process can automatically extract the contents of the prepare log file for the test.

In order to keep a complete and useful record of the tests, in step 138, the report process may then extract information regarding the environment, both the general environment as set in step 10 and also the specific test environment set up in step 98. For instance, the report process may determine the version of the test in software, the version of any used tools, the date, the configuration management, the user accounts profile etc.

The report process then in step 140, produces the final report 142. As explained previously for the framework, the final report 142 can then be mailed to a remote location in step 72.

As mentioned above, information relating to test applications, required inputs and expected outputs may be stored as test scenarios. In this way, the test automation framework may be operated for selected scenarios, the selection of a particular scenario providing the test automation framework with all of the information relating to the test application itself and the inputs and outputs of the test.

In one embodiment, as part of the setup process for the test automation framework, a test scenario description file is created. For each test scenario, there is stored at least a scenario ID and a path name of a directory containing the test application. For each test scenario, there is also stored a space separated key word list. Each key word of the list defines a particular characteristic of the test scenario. For instance, all test scenarios having a particular test application may include the same key word. Similarly, test scenarios including common ranges of inputs might include the same key words.

In the test scenario description file may also contain the path name of the script controlling the application, the format of the script file being defined by the run process. Furthermore, the description file may include a path name of the test output reference file, the output reference file defining what's the expected outputs of the scenario is and the format of the reference file being defined by the verify process.

The use of the test scenarios allows the test automation framework to select test applications, inputs and expected outputs in a particularly advantageous manner. In particular, in selection steps of the operation, such as steps 12, 26 etc., the test automation framework is able to identify all of the required information by means of merely the test scenario ID or by means of the key words. The test scenario ID will identify an individual test scenario. On the other hand, the key words will identify all stored test scenarios having the characteristics defined by the key words.

Furthermore, the test automation framework may use logical expressions to specify test scenarios. In particular, by using the test scenario IDs and key words together with logical expressions, it is possible to specify test scenarios having certain characteristics together with other characteristics or excluding other characteristics or particular test scenarios. This arrangement is particularly advantageous, since it allows a developer to define particular times of test scenario for use in testing without having to individually specify each test scenario.

As mentioned above, in the preferred embodiment, the test automation framework is implemented in software.

In order to execute the test automation framework, it is proposed to provide a test automation framework command which is referred to below as a taf command. The syntax for this command is as follows.
taf [options] [all / ALL / topicExpression]

The taf command controls the building, execution and verification of the scenarios. It includes a number of parameters and options. The scenarios are selected according to the parameters. In particular, the parameters specify individual scenarios according to their IDs, specify all scenarios that are listed in the scenario description file or specify scenarios according to the scenario key words. Indeed, the parameters can include the logical expressions mentioned above with regard to the scenarios key words.

As a result of executing the taf command, each of the specify test scenarios is processed. First, the test application associated with the scenario is built. Then, the scenario is executed. Finally, the output of the scenario is verified.

The options defined in the taf command relating to the various options mentioned with regard to the test automation framework described above. They are listed below.

**TABLE 1**

| Option | Description |
|---|---|
| -v | Prints the taf version number |
| -mail | Sends a report mail to the user or a set of users |
| -verbose | Shows all output on stdout |
| -debug | To be used to report a test automation framework defect. It prints internal information helpful to trace a problem and fix it. |
| -batch | Changes the default behaviour of the taf command. The default behaviour is to build, execute, and verify all the scenarios one after another. Rather than completely processing a scenario, and then proceed to the next, the taf command will first compile all relevant |
| | test applications, then apply all scenarios to their test applications, and then verify all outputs. |
| -clobber | Cleans up all derived files - object files, executables - before building. As a result, the build process starts from a clean environment. The build plug-in its invoked with the -clobber operation. |
| -nobuild | Skips the building phase. |
| -noexec | Skips the execution phase. |
| -nocheck | Skips the checking or verification phase. |
| -noprologue | Skips the prologue phase. |
| -noreport | Skips the reporting phase. |

As mentioned previously, the prologue, prepare, run, verify and report processes made all the implemented as plug-ins for use with the test automation framework and, for instance, the taf command.

The syntax for the prologue plug-in is preferably as follows.
prologue-plug-in [-clobber] [-nobuild] [-batch] [-noexec] [-nocheck] [-noreport]

Since the prologue process is completely optional, it will be noted that the prologue plug-in contains only options. They are listed below.

**TABLE 2**

| Option | Description |
|---|---|
| -clobber | Indicates that your script should start the compilation from scratch. This means that the script should first clean up all files that are generated by a previous prologue process. When the taf command is invoked |
| | with the -clobber option, it will invoke the build plug -in with the -clobber option. |
| -nobuild | Indicates that your script should skip the prologue phase. When the taf command is invoked with the -nobuild option, it will invoke the prologue plug-in with the -nobuild option. |
| -batch | When the taf command is invoked with the -batch option, it will invoke the prologue plug-in with it. |
| -noexec | When the taf command is invoked with the -noexec option, it will invoke the prologue plug-in with it. |
| -nocheck | When the taf command is invoked with the -nocheck option, it will invoke the prologue plug-in with it. |
| -noreport | When the taf command is invoked with the -noreport option, it will invoke the prologue plug-in with it. |

The syntax for the build plug-in which carries out the prepare process is preferably as follows.
build-plug-in [-clobber] scenarioId testDirectory

As can be seen, this includes one option, namely "clobber" which corresponds to the cleanup option of step 80 of figure 4. Otherwise, the build plug-in includes two parameters which specify the scenario to be prepared and the directory in which to initiate the prepare process. These features are listed below.

**TABLE 3**

| Option | Description |
|---|---|
| -clobber | Indicates that your script should start the compilation from scratch. This means that the script should first clean up all files that were generated by a previous |
| | build process, before starting a new build. When the taf command is invoked with the -clobber operation, it will invoke the build plug-in with the -clobber option. |

| Parameters | |
|---|---|
| scenaroid | Contains the identifier of the scenario that is being built. This identifier is defined in the scenario description file. |
| testDirectory | Specifies the directory in which the build needs to be initiated. |

The syntax for the execute plug-in which carries out the run process is preferably as follows.
execute-plug-in scenarioId testDirectory [inputScript]

As can be seen, this includes parameters for the scenario ID and for the directory in which the test application has been created. It also includes an optional argument which defines the inputs for test application. These features are listed below.

**TABLE 4**

| Parameters | Description |
|---|---|
| scenaroid | Contains the identifier of the scenario that will be executed. This identifier is defined in the scenario description file. |
| testDirectory | Specifies the directory in which the test application has been created. |

| Option | |
|---|---|
| input | This is an optional argument. When it is provided, the scenario script defines the input for the test application. Whether this file is required, and how it interacts with the execution plug-in, is not defined by the test automation framework. Plug-in developers are free to decide on this. The scenario script is defined in the scenario description file. |

The syntax for the verify plug-in is preferably as follows.
verify-plug-in scenarioId output report [reference]

As can be seen, this includes parameters for identifying the scenario to be verified, the name of the file containing the output of the test application and the name of the file that is intended to contain the verification report. The reference optional argument corresponds to steps 120 and 122 of the verify process described with reference to figures 6. These features are listed below.

**TABLE 5**

| Parameter | Description |
|---|---|
| scenariold | Contains the identifier of the scenario that will be verified. This identifier is defined in the scenario description file. |
| output | Specifies the name of the file containing the output of the test application. Thus might correspond to the execution log file. |
| report | Specifies the name of the file that is intended to contain the verification report. This file is already partially filled with the scenarioid and the test topic list. The |
| | report is logged in the test log and is sent to the user, if the -mail option is used on the taf command-line. |

| Option | |
|---|---|
| reference | This is an optional argument. It is the name of the reference file, describing the expected result of the test. The reference file is defined in the scenario description file. Whether this file is required, and how it is interpreted by the verify plug-in, is not defined by the test automation framework. Plug-in developers are free to decide on this. |

The syntax for the report plug-in is preferably as follows.
report-plug-in globalTestingStatusFile

The report plug-in thus includes only one parameter. This specifies the name of the file that is intended to be analysed by the plug-in. In particular, this file contains the status codes returned by the plug-ins for all the test applications. This file also contains the log directory for each test application. It is listed below.

**TABLE 6**

| Parameter | Description |
|---|---|
| globalTestingStatusFile | Specifies the name of the file that is intended to be analysed by the plug-in. The output of your script is always an output of taf, and is logged in the global log directory. If the -mail option is used on the taf command-line, this output is sent to the mail recipients. |

As part of the test automation framework, it is also possible to provide a process whereby tests are compared. In particular, after using the test automation framework, a developer may make changes to test applications. Having again used the test automation framework for the new test applications, it is useful to know whether the results of the test have improved, deteriorated or remain unchanged. In particular, as part of Quality Assurance activities, it is useful to control what is known as a test regression suite.

Hence, it is proposed to provide a command whereby the system analyses two global status files, i.e. the test results discussed above, and reports the differences, for instance on the standard output.

## Claims

1. A test automation framework for testing software applications including:
a memory for storing at least one test scenario including a test application, at least one input and an expected output;
an input selection means for selecting one or more test scenarios and, for each selected test scenario, selecting how to prepare, run and verify a test application;
a selection memory for storing the results of the input selection means;
select means for selecting a test application according to the contents of the selection memory;
prepare means for operating a predetermined prepare process for building the test application according to the results of the input selection means and storing a log file;
run means for operating a predetermined run process for running the test application according to the results of the input selection means and for storing a log file;
verify means for operating a verify process for verifying the results of the test application according to the results of the input selection means and for storing a log file; and
means for outputting a report of the tests which can include at least extracts of the preparation log file, the run log file and the verify log file if an error occurred.

2. A test automation framework according to claim 1, wherein the prepare means, run means and verify means all operate their corresponding processes on a selected application before operating their corresponding processes on the next selected application.

3. A test automation framework according to claim 1, wherein the select means selects each test application in turn for the prepare means, then each test application in turn for the run means and then each test application in turn for the verify means.

4. A test automation framework according to any preceding claim further comprising:
means for performing a sanity check on the results of the input selection means and, in the case of an error, aborting in all tests and reporting an error.

5. A test automation framework according to any preceding claim further comprising:
means for preparing exit status codes from the prepare process and the run process prior to performing respectively the run process and verify process and for abandoning the respective test when the exit status codes are not OK, wherein the report of the tests can include at least extracts from the log files where the exit status codes were not OK.

6. A test automation framework according to any preceding claim further comprising:
prologue means for operating a predetermined prologue process for a plurality of test applications and storing a log file; wherein
the input selection means is additionally for selecting how to perform and report the prologue process; and
the report of the tests can include at least extracts of the prologue log file according to the results of the input selection means.

7. A test automation framework according to claim 6 further comprising:
means for preparing an exit status code from the prologue process and abandoning tests when the exit status code is not OK, wherein the report of the tests can include at least extracts from the log files when the exit status code is not OK.

8. A test automation framework according to any preceding claim further comprising:
a mailer for sending the results of the tests to one or more preselected users.

9. A method of testing software applications including:
storing in a memory at least one test scenario including a test application, at least one input and an expected output;
selecting one or more test scenarios and, for each selected test scenario, selecting how to prepare, run and verify a test application;
storing the results of the input selection;
selecting a test application according to the stored results;
operating a predetermined prepare process for building the test application according to the stored results and storing a log file;
operating a predetermined run process for running the test application according to the stored results and for storing a log file;
operating a verify process for verifying the results of the test application according to the stored results and for storing a log file; and
outputting a report of the tests which can include at least extracts of the preparation log file, the run log file and the verify log file if an error occurred.

10. A computer readable storage medium having recorded thereon code components that, when loaded on a computer and executed, will cause that computer to operate according to any one of the preceding claims.
